# EUROPEAN PATENT SPECIFICATION

(11) **EP 4 499 456 B1**
(45) Date of publication and mention of the grant of the patent: **01.04.2026**
(21) Application number: 23707898.5
(22) Date of filing: 22.02.2023
(51) Int. Cl.: B60R 9/00, B60R 9/02

(54) **LUGGAGE CARRIER ADAPTED TO BE REMOVABLY MOUNTED ON A CAR**
GEPÄCKTRÄGER, DER ABNEHMBAR AN EINEM AUTO MONTIERT WERDEN KANN
PORTE-BAGAGES CONÇU POUR ÊTRE MONTÉ DE MANIÈRE AMOVIBLE SUR UNE VOITURE

(30) Priority: 28.03.2022 DK PA202270145
(43) Date of publication of application: 05.02.2025
(73) Proprietor: Bønsdorff Holding ApS, 9000 Aalborg (DK)
(72) Inventor: BØNSDORFF, Jørgen, 9000 Aalborg (DK)
(74) Representative: Guardian IP Consulting I/S
(86) International application number: PCT/EP2023/054456
(87) International publication number: WO 2023/186409

(56) References cited:
- US-A- 3 286 892
- US-A- 5 390 837

## Description

The present invention relates to a luggage carrier adapted to be removably mounted on a car, the luggage carrier including a set of two luggage holders adapted to be arranged on the car at a distance from each other so that an elongate object may be carried by the luggage holders, each luggage holder extending in a vertical direction in its mounted state on the car, and each luggage holder having a luggage carrying part and a car engagement part, the luggage carrying part being adapted to detachably engage a part of the elongated object, and the car engagement part being adapted to engage a top edge of a side window pane of the car.

Various types of luggage carriers for cars are known, such as rooftop carriers in the form of racks, carriers to be arranged on the tow bar, luggage racks to be mounted directly on the car boot, and many more. However, these devices are generally cumbersome to mount on the car and take up storage place when not in use. Moreover, generally, people do not want to have a luggage carrier permanently mounted on their car.

However, now and then, the need to carry a longer object which does not fit in the car may arise. For instance, when visiting a do-it-yourself market, you may want to carry home a cable duct, a garden tool, etc.

US 2012/234885 A1, US 2,797,851 A and SE 1300787 A1 disclose different luggage carriers adapted to engage a top edge of a side window pane of a car and thereby carry an elongate object. However, with these luggage carriers, it may be a disadvantage that, when an elongated object is arranged in the luggage carrying part of each luggage holder mounted on the car, not all the doors of the car may be opened.

The object of the present invention is to provide a temporary luggage carrier which does not impede the opening of the doors of a car on which it is mounted.

In view of this object, in each luggage holder, the luggage carrying part is arranged rotatably on the car engagement part about an axis being at least substantially vertical in the mounted state of the luggage holder on the car.

In this way, it may be obtained that even when an elongated object is arranged in the luggage carrying part of each luggage holder mounted on the car, the doors of both sides of the car may be opened. In this situation, each luggage carrying part may simply rotate in relation to the car engagement part.

According to the invention, by slightly opening a front side window pane and a rear side window pane of the car in the same side of the car (left or right), a first one of the set of two luggage holders may simply connect a front end part of the elongated object to an edge of the front side window pane of the car, and a second one of the set of two luggage holders may simply connect a rear end part of the elongated object to an edge of the rear side window pane of the car. Thereby, each luggage holder may be very small and the set of two luggage holders may easily fit into a glove box of the car and may therefore always be ready for use, should the need arise.

In a structurally particularly advantageous embodiment, the car engagement part has an at least substantially U-formed pane engagement portion adapted to engage the top edge and a part of each side of said side window pane.

In an embodiment, the car engagement part is adapted to also engage a lower part of a car side window top frame when said side window pane is almost closed. Thereby, the car engagement part may be more securely fixed to the car in that it may be trapped between the top edge of the side window pane of the car and the lower part of the car side window top frame by slowly closing said side window pane almost to its top position. In this way, the car engagement part may even be fixed in the car door by clamping as a result of the movement of the window pane during its closing operation.

In a structurally particularly advantageous embodiment, the car engagement part has a preferably rounded car side window top frame engagement portion adapted to extend up into an at least substantially U-formed pane engagement portion of said car side window top frame. Thereby, by forming the car side window top frame engagement portion of the car engagement part so that its form resembles that of the top edge of the corresponding car side window pane, it may be obtained that the car side window top frame engagement portion fits the pane engagement portion of said car side window top frame as good as the top edge of the car side window pane does.

In an embodiment, the car side window top frame engagement portion extends in a straight line with a symmetry line of the at least substantially U-formed pane engagement portion. Thereby, the car engagement part may even better fit between the top edge of the side window pane of the car and the lower part of the car side window top frame in that said straight line may be arranged in line with the car side window.

In an embodiment, said symmetry line of the at least substantially U-formed pane engagement portion forms an acute angle with the vertical direction of each luggage holder. Thereby, the luggage holders may better fit car side windows which are often arranged obliquely to a vertical line.

In an embodiment, in the vertical direction of each luggage holder, the luggage carrying part is arranged above the car engagement part. Thereby, it may be avoided that the view through the car side windows is obstructed in that the luggage carrying part may be arranged above the top of the car side window pane.

In an embodiment, in each luggage holder, the luggage carrying part is arranged rotatably about an at least substantially vertical axis on the car engagement part. Thereby, it may be obtained that even when an elongated object is arranged in the luggage carrying part of each luggage holder mounted on the car, the doors of the car may be opened. In this situation, each luggage carrying part may simply rotate in relation to the car engagement part.

In a structurally particularly advantageous embodiment, in each luggage holder, the luggage carrying part has the form of an upwardly open at least substantially U-formed or V-formed bracket. Thereby, an elongated object may very easily be placed in the corresponding luggage carrying parts.

In an embodiment, the outside of the at least substantially U-formed or V-formed bracket is provided with barbs adapted to hold a rubber band or the like. Thereby, safe attachment of the elongated object may be facilitated.

The invention will now be explained in more detail below by means of examples of embodiments with reference to the very schematic drawing, in which
Fig. 1 is a side view of a car with a luggage carrier according to the present invention;
Fig. 2 is a detail of the luggage carrier of Fig. 1 in the form of a luggage holder, on a larger scale;
Fig. 3 is a cross-section through part of the front side window of the car of Fig. 1 with a luggage holder mounted thereon;
Fig. 4 is a view corresponding to that of Fig. 2 on an even larger scale;
Fig. 5 is a perspective view of the luggage holder of Fig. 4 seen obliquely from top left; and

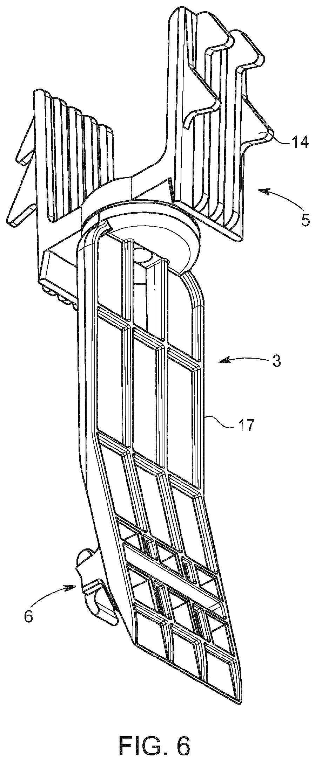

Fig. 6 is a perspective view of the luggage holder of Fig. 4 seen obliquely from bottom right.

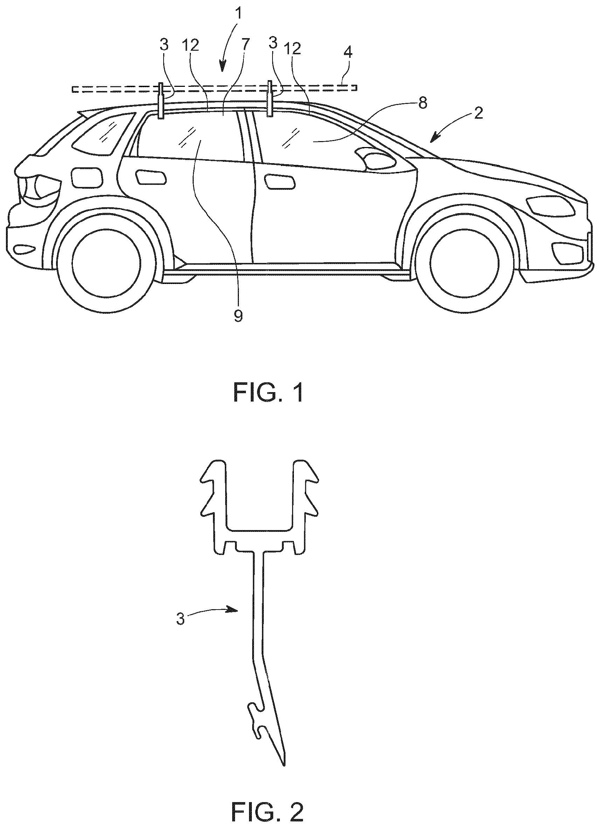

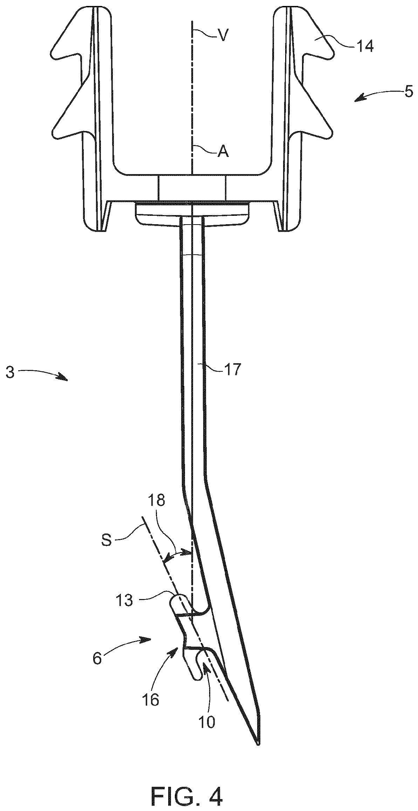

Fig. 1 shows a luggage carrier 1 according to the present invention removably mounted on a car 2. The luggage carrier 1 includes a set of two luggage holders 3 arranged on the car 2 at a distance from each other so that an elongate object 4 may be carried by the luggage holders 3. As indicated in Fig. 4, each luggage holder 3 extends in a vertical direction V in its mounted state on the car 2. Furthermore, each luggage holder 3 has a luggage carrying part 5 and a car engagement part 6. The luggage carrying part 6 detachably engages an end part of the elongated object 4.

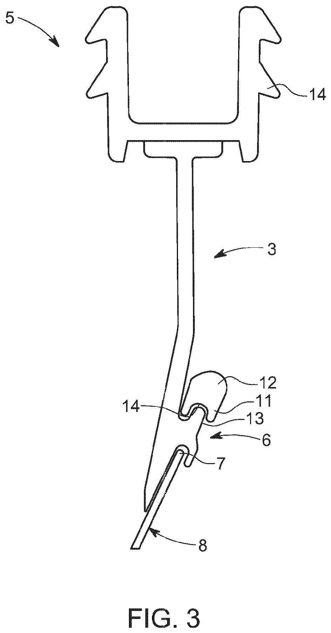

As seen particularly well in Fig. 3, the car engagement part 6 is engages a top edge 7 of a side window pane 8, 9 of the car 2.

As further seen in Fig. 3, the car engagement part 6 has a U-formed pane engagement portion 10 engaging the top edge 7 and a part of each side of said side window pane 8, 9.

Furthermore, the car engagement part 6 engages a lower part 11 of a car side window top frame 12 in that said side window pane 8, 9 is almost closed.

As further seen, the car engagement part 6 has a rounded car side window top frame engagement portion 13 extending up into an at least substantially U-formed pane engagement portion 14 of said car side window top frame 12.

As illustrated in Fig. 4, the car side window top frame engagement portion 13 extends in a straight line with a symmetry line S of the at least substantially U-formed pane engagement portion 10.

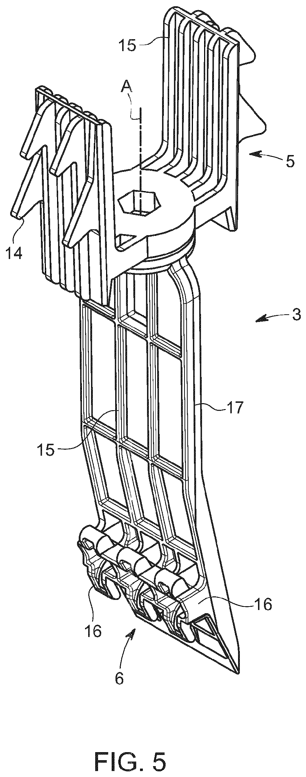

As also seen in Fig. 5, said symmetry line S of the at least substantially U-formed pane engagement portion 10 forms an acute angle 18 with the vertical direction V of each luggage holder 3.

As seen, in the vertical direction V of each luggage holder 3, the luggage carrying part 5 is arranged above the car engagement part 6.

As illustrated in Figs. 4 and 5, in each luggage holder 3, the luggage carrying part 5 is arranged rotatably about an at least substantially vertical axis A on the car engagement part 6.

Preferably, in each luggage holder 3, the luggage carrying part 5 has the form of an upwardly open at least substantially U-formed or V-formed bracket.

Preferably, the outside of the at least substantially U-formed or V-formed bracket is provided with barbs 14 or the like adapted to hold a rubber band or the like.

Each luggage holder is preferably produced by injection moulding from a suited plastic material. Preferably, as understood from the above, each luggage holder is produced by two different parts, namely the luggage carrying part 5 and the car engagement part 6 which are rotatably connected. Both the luggage carrying part 5 and the car engagement part 6 are preferably injection moulded and connected by a rotatable snap connection or any other suitable connection. As seen, in the illustrated embodiment, the car engagement part 6 has a relatively long and vertically extending intermediate part 17 connecting to said rotatable connection. As a result, advantageously, the elongated object 4 may be carried at a height above a roof of the car 2, as seen in Fig. 1, thereby not obstructing the view through the side window panes.

As seen in Fig. 5, preferably, both the luggage carrying part 5 and the car engagement part 6 are provided with reinforcement ribs 15.

As seen in Fig. 4, both the U-formed pane engagement portion 10 and the rounded car side window top frame engagement portion 13 may be formed by a T-formed element 16. As further seen in Fig. 5, in the illustrated embodiment, three such T-formed elements 16 are arranged beside each other. An advantage of providing more than one T-formed element 16 may be that a certain flexibility of the elements may provide better grip to the window pane and window top frame when more T-formed element 16 are arranged beside each other. Any suitable number of T-formed elements 16 may be used.

## Claims

1. A luggage carrier (1) adapted to be removably mounted on a car (2), the luggage carrier (1) including a set of two luggage holders (3) adapted to be arranged on the car (2) at a distance from each other so that an elongate object (4) may be carried by the luggage holders (3), each luggage holder (3) extending in a vertical direction (V) in its mounted state on the car (2), and each luggage holder (3) having a luggage carrying part (5) and a car engagement part (6), the luggage carrying part (5) being adapted to detachably engage a part of the elongated object (4), and the car engagement part (6) being adapted to engage a top edge (7) of a side window pane (8, 9) of the car (2), **characterised in that,** in each luggage holder (3), the luggage carrying part (5) is arranged rotatably on the car engagement part (6) about an axis (A) being at least substantially vertical in the mounted state of the luggage holder (3) on the car (2).

2. A luggage carrier according to claim 1, wherein the car engagement part (6) has an at least substantially U-formed pane engagement portion (10) adapted to engage the top edge (7) and a part of each side of said side window pane (8, 9).

3. A luggage carrier according to claim 1 or 2, wherein the car engagement part (6) is adapted to also engage a lower part (11) of a car side window top frame (12) when said side window pane (8, 9) is almost closed.

4. A luggage carrier according to claim 3, wherein the car engagement part (6) has a preferably rounded car side window top frame engagement portion (13) adapted to extend up into an at least substantially U-formed pane engagement portion (14) of said car side window top frame (12).

5. A luggage carrier according to claim 4, wherein the car side window top frame engagement portion (13) extends in a straight line with a symmetry line (S) of the at least substantially U-formed pane engagement portion (10).

6. A luggage carrier according to claim 5, wherein said symmetry line (S) of the at least substantially U-formed pane engagement portion (10) forms an acute angle (18) with the vertical direction (V) of each luggage holder (3).

7. A luggage carrier according to any one of the preceding claims, wherein, in the vertical direction (V) of each luggage holder (3), the luggage carrying part (5) is arranged above the car engagement part (6).

8. A luggage carrier according to any one of the preceding claims, wherein, in each luggage holder (3), the luggage carrying part (5) has the form of an upwardly open at least substantially U-formed or V-formed bracket.

9. A luggage carrier according to claim 8, wherein the outside of the at least substantially U-formed or V-formed bracket is provided with barbs (14) adapted to hold a rubber band or the like.

## Patentansprüche

1. Gepäckträger (1), der angepasst ist, um abnehmbar auf einem Auto (2) montiert zu werden, wobei der Gepäckträger (1) einen Satz von zwei Gepäckhaltern (3) beinhaltet, die angepasst sind, um in einem Abstand zueinander auf dem Auto (2) angeordnet zu sein, sodass ein länglicher Gegenstand (4) von den Gepäckhaltern (3) getragen werden kann, wobei sich jeder Gepäckhalter (3) in seinem montierten Zustand auf dem Auto (2) in vertikaler Richtung (V) erstreckt, und jeder Gepäckhalter (3) einen Gepäckträgerteil (5) und einen Autoeingriffsteil (6) aufweist, wobei der Gepäckträgerteil (5) angepasst ist, um lösbar in einen Teil des länglichen Gegenstands (4) einzugreifen, und der Autoeingriffsteil (6) angepasst ist, um in eine Oberkante (7) einer Seitenfensterscheibe (8, 9) des Autos (2) einzugreifen, **dadurch gekennzeichnet, dass** der Gepäckträgerteil (5) in jedem Gepäckhalter (3) um eine Achse (A), die im montierten Zustand des Gepäckträgers (3) auf dem Auto (2) im Wesentlichen vertikal verläuft, drehbar auf dem Autoeingriffsteil (6) angeordnet ist.

2. Gepäckträger nach Anspruch 1, wobei der Autoeingriffsteil (6) einen mindestens im Wesentlichen U-förmigen Scheibeneingriffsabschnitt (10) aufweist, der angepasst ist, um in die Oberkante (7) und einen Teil jeder Seite der Seitenfensterscheibe (8, 9) in Eingriff zu gelangen.

3. Gepäckträger nach Anspruch 1 oder 2, wobei der Autoeingriffsteil (6) angepasst ist, um auch in einen unteren Teil (11) des oberen Seitenfensterrahmens (12) in Eingriff zu gelangen, wenn die Seitenfensterscheibe (8, 9) beinahe geschlossen ist.

4. Gepäckträger nach Anspruch 3, wobei der Autoeingriffsteil (6) einen vorzugsweise abgerundeten Eingriffsabschnitt (13) am oberen Rahmen des Autoseitenfensters aufweist, der angepasst ist, um sich nach oben in einen mindestens im Wesentlichen U-förmigen Scheibeneingriffsabschnitt (14) des oberen Rahmens (12) des Autoseitenfensters zu erstrecken.

5. Gepäckträger nach Anspruch 4, wobei sich der obere Eingriffsabschnitt (13) am oberen Rahmen des Autoseitenfensters in einer geraden Linie mit einer Symmetrielinie (S) des mindestens im Wesentlichen U-förmigen Scheibeneingriffsabschnitts (10) erstreckt.

6. Gepäckträger nach Anspruch 5, wobei die Symmetrielinie (S) des mindestens im Wesentlichen U-förmigen Scheibeneingriffsabschnitts (10) einen spitzen Winkel (18) mit der vertikalen Richtung (V) eines jeden Gepäckhalters (3) bildet.

7. Gepäckträger nach einem der vorstehenden Ansprüche, wobei in vertikaler Richtung (V) eines jeden Gepäckhalters (3) der Gepäckträgerteil (5) oberhalb des Autoeingriffsteils (6) angeordnet ist.

8. Gepäckträger nach einem der vorstehenden Ansprüche, wobei in jedem Gepäckhalter (3) der Gepäckträgerteil (5) die Form einer nach oben offenen, mindestens im Wesentlichen U- oder V-förmigen Halterung aufweist.

9. Gepäckträger nach Anspruch 8, wobei die Außenseite der mindestens im Wesentlichen U- oder V-förmigen Halterung mit Widerhaken (14) bereitgestellt ist, die angepasst sind, um ein Gummiband oder dergleichen zu halten.

## Revendications

1. Porte-bagages (1) adapté pour être monté de manière amovible sur une voiture (2), le porte-bagages (1) incluant un ensemble de deux supports de bagages (3) adaptés pour être agencés sur la voiture (2) à une distance l'un de l'autre de façon à ce qu'un objet allongé (4) puisse être porté par les supports de bagages (3), chaque support de bagages (3) s'étendant dans une direction verticale (V) dans son état monté sur la voiture (2), et chaque support de bagages (3) présentant une partie portant des bagages (5) et une partie d'entrée en prise avec la voiture (6), la partie portant des bagages (5) étant adaptée pour entrer en prise de manière détachable avec une partie de l'objet allongé (4), et la partie d'entrée en prise avec la voiture (6) étant adaptée pour entrer en prise avec un bord supérieur (7) d'une vitre latérale (8, 9) de la voiture (2), **caractérisé en ce que,** dans chaque support de bagages (3), la partie portant des bagages (5) est agencée de manière rotative sur la partie d'entrée en prise avec la voiture (6) autour d'un axe (A) qui est au moins sensiblement vertical dans l'état monté du support de bagages (3) sur la voiture (2).

2. Porte-bagages selon la revendication 1, dans lequel la partie d'entrée en prise avec la voiture (6) présente une portion d'entrée en prise avec une vitre au moins sensiblement en forme de U (10) adaptée pour entrer en prise avec le bord supérieur (7) et une partie de chaque côté de ladite vitre latérale (8, 9).

3. Porte-bagages selon la revendication 1 ou 2, dans lequel la partie d'entrée en prise avec la voiture (6) est adaptée pour entrer en prise également avec une partie inférieure (11) d'un cadre supérieur de glace latérale de voiture (12) lorsque ladite vitre latérale (8, 9) est presque fermée.

4. Porte-bagages selon la revendication 3, dans lequel la partie d'entrée en prise avec la voiture (6) présente une portion d'entrée en prise avec un cadre supérieur de glace latérale de voiture (13) de préférence arrondie adaptée pour s'étendre jusque dans une portion d'entrée en prise avec une vitre au moins sensiblement en forme de U (14) dudit cadre supérieur de glace latérale de voiture (12).

5. Porte-bagages selon la revendication 4, dans lequel la portion d'entrée en prise avec un cadre supérieur de glace latérale de voiture (13) s'étend en ligne droite avec une ligne de symétrie (S) de la portion d'entrée en prise avec une vitre au moins sensiblement en forme de U (10).

6. Porte-bagages selon la revendication 5, dans lequel ladite ligne de symétrie (S) de la portion d'entrée en prise avec une vitre au moins sensiblement en forme de U (10) forme un angle aigu (18) avec la direction verticale (V) de chaque support de bagages (3).

7. Porte-bagages selon l'une quelconque des revendications précédentes, dans lequel, dans la direction verticale (V) de chaque support de bagages (3), la partie portant des bagages (5) est agencée au-dessus de la partie d'entrée en prise avec la voiture (6).

8. Porte-bagages selon l'une quelconque des revendications précédentes, dans lequel, dans chaque support de bagages (3), la partie portant des bagages (5) présente la forme d'une base au moins sensiblement en forme de U ou en forme de V ouverte vers le haut.

9. Porte-bagages selon la revendication 8, dans lequel l'extérieur de la base au moins sensiblement en forme de U ou en forme de V est pourvu d'ardillons (14) adaptés pour supporter une bande élastique ou similaire.
